# EUROPEAN PATENT SPECIFICATION

(11) **EP 3 164 303 B1**
(45) Date of publication and mention of the grant of the patent: **28.11.2018**
(21) Application number: 14735570.5
(22) Date of filing: 03.07.2014
(51) Int. Cl.: B60S 1/38, B60S 1/40

(54) **WINDSCREEN WIPER DEVICE**
SCHEIBENWISCHERVORRICHTUNG
DISPOSITIF D'ESSUIE-GLACE

(43) Date of publication of application: 10.05.2017
(73) Proprietor: Federal-Mogul S.A., 6790 Aubange (BE)
(72) Inventor: FRISCIONI, Thomas, F-54135 Mexy (FR)
(74) Representative: Hooiveld, Arjen Jan Winfried
(86) International application number: PCT/EP2014/064233
(87) International publication number: WO 2016/000785

(56) References cited:
- EP-A1- 1 847 425
- WO-A1-2012/007028
- DE-A1-102011 079 783
- US-A1- 2010 050 361
- US-A1- 2010 205 763

## Description

The present invention relates to a windscreen wiper device of the flat blade type comprising an elastic, elongated carrier element, as well as an elongated wiper blade of a flexible material, which can be placed in abutment with a windscreen to be wiped, which wiper blade includes at least one longitudinal groove, in which groove a longitudinal strip of the carrier element is disposed, which windscreen wiper device comprises a connecting device for an oscillating arm, wherein said oscillating arm can be pivotally connected to said connecting device about a pivot axis near one end, with the interposition of a joint part, wherein said joint part is detachably connected to said connecting device by engaging protrusions of said connecting device, at the location of said pivot axis, in recesses provided in said joint part.

In use, said oscillating arm is connected to a mounting head mounted on a drive shaft, wherein said oscillating arm at one end thereof is pivotally connected to the mounting head by means of a pivot pin and at another end thereof is connected to said wiper blade placed in abutment with said windscreen to be wiped. In use, the shaft rotates alternately in a clockwise and in a counter-clockwise sense carrying the mounting head into rotation also, which in turn draws the oscillating arm into rotation and by means of said connecting device moves the wiper blade. Said oscillating arm can thus oscillate to-and-from between a first reversal position and a second reversal position. Said first reversal position may be identified as a position, wherein the arm members extend parallel to a windscreen to be wiped and are located near a lower edge of said windscreen to be wiped. Also, said second reversal position may be formulated as a position, wherein the arm members extend also parallel to a windscreen to be wiped and are located in a central region or near a side edge of said windscreen to be wiped.

The present invention also relates to a vehicle equipped with such a windscreen wiper device, as well as to a method for manufacturing such a windscreen wiper device.

It is noted that the present invention is not restricted to automobiles, but also refers to rail coaches and other (fast) vehicles.

Such a windscreen wiper device is generally known from European patent publication no. 1 403 156 of the same Applicant. This prior art windscreen wiper device is designed as a "yokeless" wiper device or "flat blade", wherein no use is made of several yokes pivotally connected to each other, but wherein the wiper blade is biased by the carrier element, as a result of which it exhibits a specific curvature. In this prior art windscreen wiper device the joint part comprises at least one resilient tongue engaging in a correspondingly shaped hole provided in the oscillating arm, wherein the resilient tongue is rotatable along an hinge axis between an outward position retaining the wiper blade onto the oscillating arm and an inward position releasing the wiper blade from the oscillating arm. In order to connect the wiper blade onto the oscillating arm, the resilient tongue is initially pushed in against a spring force - as if it were a push button - and then allowed to spring back into the hole provided in the oscillating arm, thus snapping, that is clipping the resilient tongue into the hole. By subsequently pushing in again the resilient tongue against the spring force, the wiper blade may be released from the oscillating arm. EP-A-1847425 shows the preamble of claims 1 and 12. The object of the invention is to provide an improved windscreen wiper device at minimum costs - without using complex machinery and additional tools -, while the connecting device and the oscillating arm can be interconnected in a reliable and secure manner.

According to the invention, said protrusions of said connecting device are provided with co-axial through holes, wherein an upper surface of said joint part comprises a central recess, wherein
- said central recess (20) is arranged to accommodate a free end of a rod-shaped oscillating arm of a first type;
- said upper surface is arranged to accommodate a L-shaped shoulder near a free end of an oscillating arm of a second type, wherein said free end of said oscillating arm of the second type also comprises a transverse pivot pin, wherein said co-axial through holes are arranged to receive said pivot pin and wherein a side of said joint part is arranged to abut a leg of said L-shaped shoulder disposed at an end thereof and facing a windscreen to be wiped, wherein said joint part comprises a cap provided with a protrusion in use extending in downward direction towards a windscreen to be wiped, and wherein said downwardly extending protrusion is adapted to engage in a correspondingly shaped hole provided in said oscillating arm of a first type for retaining said wiper blade onto said oscillating arm.
Preferably, said joint part comprises laterial retention means to restrict angular play of the oscillating arm of the first type. Particularly, said cap is hingeably connected to said joint part between a closed position, wherein said wiper blade is retained onto said oscillating arm, and an open position, wherein said wiper blade can be released from said oscillating arm.
Preferably, said joint part is detachably connected to said connecting device particularly through a snapping/clipping operation. Further, the protrusions that function as bearing surfaces are spaced far apart, so that the forces exerted thereon will be relatively low.
Said joint part is arranged to be connected to said connecting device for different types of interconnection between the wiper blade and the oscillating arm, wherein said joint part is subsequently connected to said connecting device by pivotally engaging protrusions of said connecting device, at the location of said pivot axis, in recesses provided in said joint part, and wherein the oscillating arm can be subsequently connected to said joint part. The essence of the present invention is that said connecting device and said joint part each are a universal connection for each type of interconnection between the wiper blade and the oscillating arm. A same type of said joint part to be connected to a same type of said connecting device may be used for each different type of interconnection between the wiper blade and the oscillating arm. The advantage achieved by the invention is that a unit consisting of said wiper blade, said connecting device and said joint part connected to said connecting device can be manufactured for each and every type of interconnection between said wiper blade and said oscillating arm. Thus, a universal connection between the wiper blade and the oscillating arm is obtained, so that car drivers are given the possibility to buy also non-original cheap wiper blades fitting the original oscillating arms on their cars.
The present invention thus provides a universal connecting unit (consisting of said connecting device and said joint part) that is firmly attached to the oscillating arm.

In a preferred embodiment of a windscreen wiper device in accordance with the invention said joint part has an at least substantially U-shaped cross-section at the location of its connection to said connecting device, wherein said recess is provided in the base of the U-shaped cross-section.
In another preferred embodiment of a windscreen wiper device according to the invention said joint part comprises two spaced-apart guiding protrusions extending upwardly from an upper surface of said joint part, wherein said guiding protrusions are adapted to receive said oscillating arm of the first type between them.
In another preferred embodiment of a windscreen wiper device in accordance with the invention said joint part has an at least substantially U-shaped cross-section at the location of its connection to said connecting device, wherein said joint part in each leg of said U-shaped cross-section is provided with said recess provided coaxially with said pivot axis.
In another preferred embodiment of a windscreen wiper device according to the invention the protrusions extend outwards on either side of said connecting device, wherein the protrusions and their co-axial through holes are at least substantially cylindrical.

In another preferred embodiment of a windscreen wiper device in accordance with the invention said connecting device can be pivotally connected to said oscillating arm near its free end about a pivot axis of said transverse pivot pin provided on said oscillating arm of the second type. Preferably, said joint part has an at least substantially U-shaped cross-section at the location of its connection to said connecting device, wherein said joint part in each leg of said U-shaped cross-section is provided with said recess provided coaxially with said pivot axis, said recesses being co-axial, and wherein said co-axial recesses and said co-axial through holes of said protrusions of said connecting device are adapted to receive said pivot pin. In other words, the diameter of the pivot pin is adapted to the diameter of the bearing holes or said co-axial through holes of said protrusions of said connecting device and to the diameter of said recesses provided in legs of the U-shaped cross-section of said joint part. In order to secure or retain the connecting device (and thus the wiper blade connected thereto) onto the oscillating arm, said oscillating arm is preferably provided with an extension comprising said pivot pin and a L-shape shoulder projecting out in the direction of said pivot pin and across said wiper blade and at the end of which is disposed a leg facing the windscreen to be wiped. Particularly, said connecting device has a width of approximately 22 mm at the location of said L-shaped shoulder.

As indicated above, the present invention also refers to a vehicle provided with a windscreen wiper device according to the invention.

The present invention also refers to a method for manufacturing a windscreen wiper device of the flat blade type comprising an elastic, elongated carrier element, as well as an elongated wiper blade of a flexible material, which can be placed in abutment with a windscreen to be wiped, which wiper blade includes at least one longitudinal groove, in which groove a longitudinal strip of the carrier element is disposed, which windscreen wiper device comprises a connecting device for an oscillating arm, wherein said oscillating arm can be pivotally connected to said connecting device about a pivot axis near one end, with the interposition of a joint part, wherein said joint part is detachably connected to said connecting device by engaging protrusions of said connecting device, at the location of said pivot axis, in recesses provided in said joint part, characterized in that said protrusions of said connecting device are provided with co-axial through holes, wherein an upper surface of said joint part comprises a central recess, wherein
- said central recess (20) is arranged to accommodate a free end of a rod-shaped oscillating arm of a first type;
- said upper surface is arranged to accommodate a L-shaped shoulder near a free end of an oscillating arm of a second type, wherein said free end of said oscillating arm of the second type also comprises a transverse pivot pin, wherein said co-axial through holes are arranged to receive said pivot pin and wherein a side of said joint part is arranged to abut a leg of said L-shaped shoulder disposed at an end thereof and facing a windscreen to be wiped, wherein said joint part comprises a cap provided with a protrusion in use extending in downward direction towards a windscreen to be wiped, and wherein said downwardly extending protrusion is adapted to engage in a correspondingly shaped hole provided in said oscillating arm of a first type for retaining said wiper blade onto said oscillating arm.
The invention will now be explained more in detail with reference to figures illustrated in a drawing, wherein
- figure 1 is a perspective, schematic view of a windscreen wiper device of the flat blade type according to the prior art, with (a part of) an oscillating arm;
- figure 2 shows a perspective, cross-sectional and side view of a connecting device together with a joint part in a preferred embodiment according to the invention to be used in a windscreen wiper device of the flat blade type;
- figure 3 shows a perspective, cross-sectional and top view of the connecting device together with the joint part of figure 2, all with (a part of) an oscillating arm of the first type (except for a part of figure 3 right below); and
- figure 4 shows a perspective, side and top view of the connecting device together with the joint part of figure 2, all with (a part of) an oscillating arm of the second type (except for a part of figure 3 in the middle).

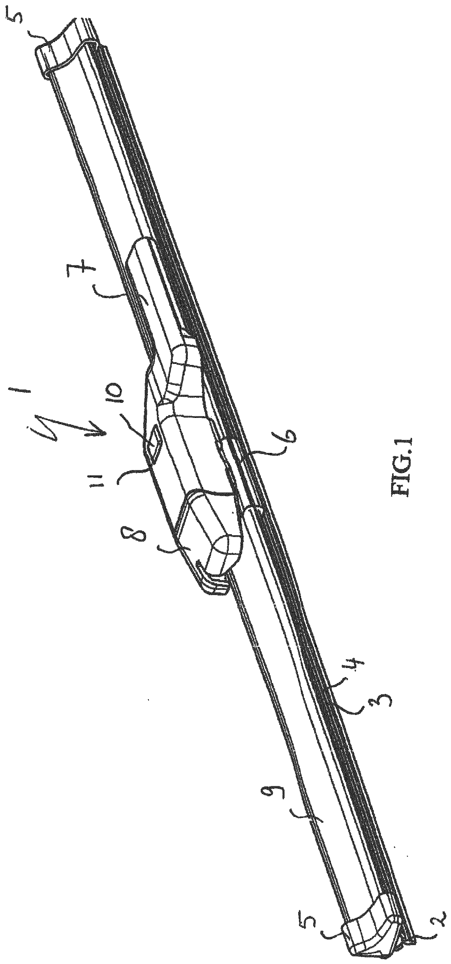

Figure 1 shows a windscreen wiper device 1 of the flat blade type according to the prior art. Said windscreen wiper device is built up of an elastomeric (rubber) wiper blade 2 comprising a central longitudinal groove 3, wherein a longitudinal strip 4 made of spring band steel is fitted in said longitudinal groove 3. Said strip 4 forms a flexible carrier element for the rubber wiper blade 2, as it were, which is thus biased in a curved position (the curvature in operative position being that of a windscreen to be wiped). An end of said strip 4 and/or an end of said wiper blade 2 is connected on either side of the windscreen wiper device 1 to respective connecting pieces or "end caps" 5. In this embodiment, the connecting pieces 5 are separate constructional elements, which may be form-locked as well as force-locked to both ends of said strip 4 and/or ends of said wiper blade 2. In another variant, said connecting pieces 5 are in one piece with the strip 4 made of spring band steel. The windscreen wiper device 1 is furthermore built up of a connecting device 6 of metal for connecting an oscillating wiper arm 7 thereto, with the interposition of a joint part 8. The oscillating wiper arm 7 is pivotally connected to the connecting device 6 about a pivot axis near one end. In the embodiment of figure 1 there is a spoiler or "air deflector" 9 which is made in one piece with the rubber wiper blade 2 and which extends along the entire length thereof.

As can be seen in figure 1, the joint part 8 comprises a resilient tongue 10 extending outwardly, while the oscillating arm 7 has an U-shaped cross-section at the location of its connection to said joint part 8, so that the tongue 10 engages in an identically shaped hole 11 provided in a base of said U-shaped cross-section. The connecting device 6 with the wiper blade 2 is mounted onto the oscillating arm 7 as follows. The joint part 8 being already clipped onto the connecting device 6 is pivoted relative to the connecting device 6, so that said joint part 8 can be easily slid on a free end of the oscillating arm 7. During this sliding movement the resilient tongue 10 is initially pushed in against a spring force and then allowed to spring back into said hole 11, thus snapping, that is clipping the resilient tongue 10 into the hole 11. This is a so-called bayonet-connection. The oscillating arm 7 together with the joint part 8 may then be pivoted back in a position parallel to the wiper blade 2 in order to be ready for use. By subsequently pushing in again said resilient tongue 10 against the spring force (as if it were a push button), the connecting device 6 and the joint part 8 together with the wiper blade 2 may be released from the oscillating arm 7. Dismounting the connecting device 6 with the wiper blade 2 from the oscillating arm 7 is thus realized by sliding the connecting device 6 and the joint part 8 together with the wiper blade 2 in a direction away from the oscillating arm 7.

Although not shown in figure 1, but fully understood by a skilled person, said oscillating arm 7 is connected to a mounting head fixed for rotation to a shaft driven by a small motor. In use, the shaft rotates alternately in a clockwise and in a counter-clockwise sense carrying the mounting head into rotation also, which in turn draws said oscillating arm 7 into rotation and by means of said connecting device 6 moves said wiper blade 2.

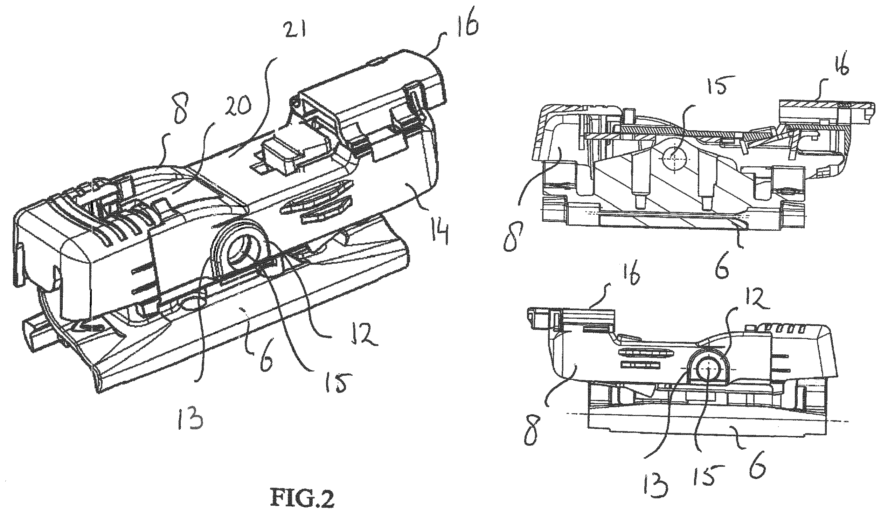

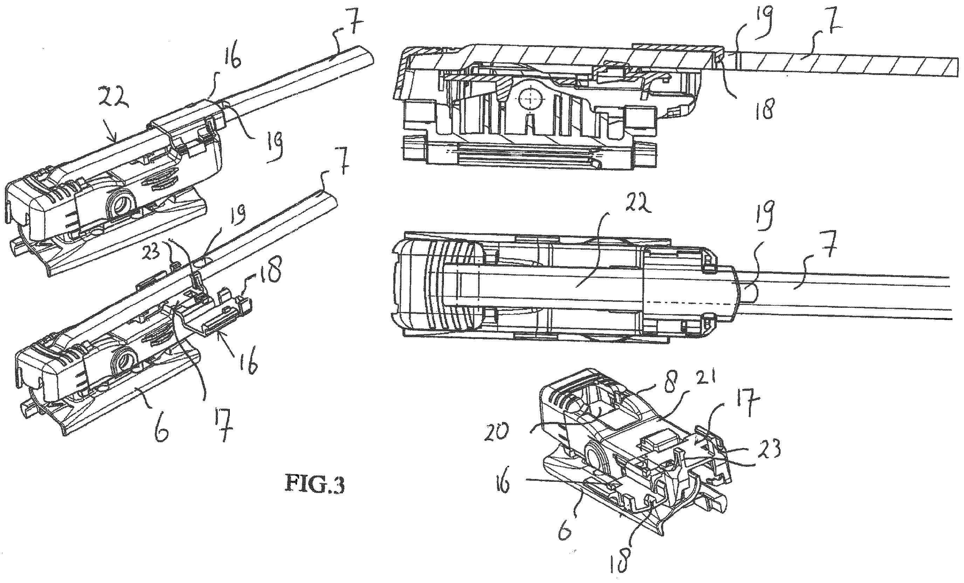

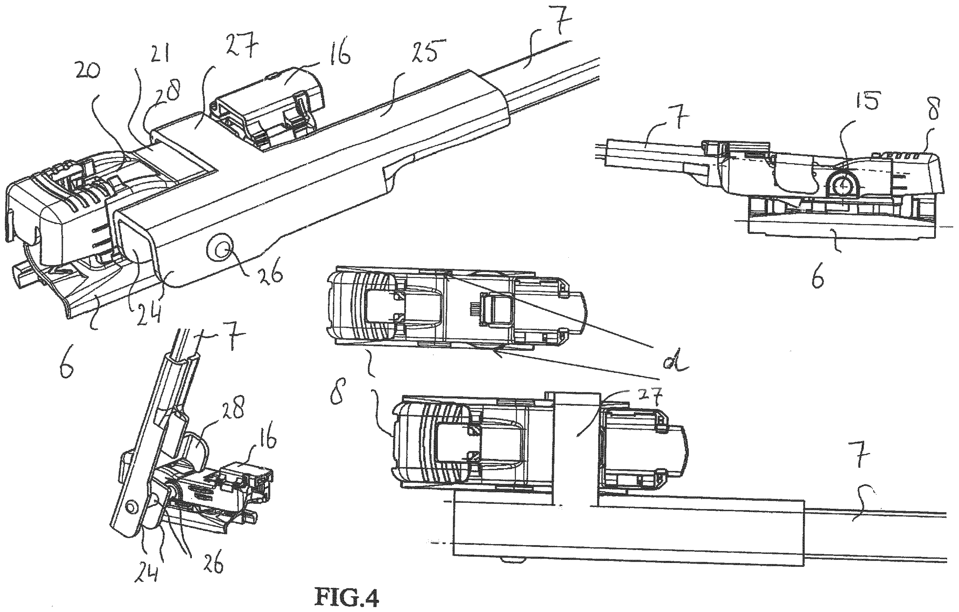

In figure 2 is depicted a unit consisting of a connecting device 6 and a joint part 8 detachably and pivotally connected thereto according to the invention, wherein said unit is universal part in the sense that it can be used for each and every type of interconnection between a wiper blade 2 and an oscillating arm 7, that is, for example, for said interconnection as shown in figure 3 on the one hand and for said interconnection as shown in figure 4 on the other hand. Said connecting device 6 is particularly welded, soldered, glued or clamped onto two spaced-apart longitudinal strips 4 disposed on opposite sides in longitudinal grooves 3 of the wiper blade 2. In the alternative or in addition thereto, said connecting device 6 is connected to the elastomeric (rubber) material of the wiper blade, for example glued or clamped. As can be seen in figure 2, said connecting device 6 comprises two cylindrical protrusions 12 extending outwardly on either side thereof. These protrusions 12 pivotally engage in identically shaped cylindrical recesses 13 in legs 14 of a U-shaped cross-section of said joint part 8. Said protrusions 12 function as bearing surfaces at the location of the pivot axis in order to pivot the joint part 8 (and the oscillating arm 7 attached thereto) about said pivot axis near one end of said oscillating arm 7. Said protrusions 12 are provided with co-axial through holes 15 in order to allow the interconnection shown in figure 4, as will be explained in further detail below. The protrusions 12 are preferably in one piece with said connecting device 6. In the alternative said protrusions 12 are part of a separate pin to be inserted into opposite holes in sidewalls of said connecting device 6 (not shown).

As depicted in figures 2 and 3, said joint part 8 comprises a cap 16 on an upper surface 17 thereof provided with an in use downwardly extending protrusion 18, wherein said downwardly extending protrusion 18 is adapted to engage in a correspondingly shaped hole 19 provided in said oscillating arm 7 for retaining said wiper blade 2 onto said oscillating arm 7. Said cap 16 has a U-shaped cross-section, wherein said protrusion 18 extends from a base of said U-shaped cross-section of said cap 16 in downward direction in use. Said cap 16 near an edge of said upper surface 17 is hingeably connected to said joint part 8 between a closed position (seen in figure 2 and figure 3 left above), wherein said wiper blade 2 can be retained onto said oscillating arm 7, and an open position (seen in figure 3 left below and right below), wherein said wiper blade 2 can be released from said oscillating arm 7. Said joint part 8 further comprises a recess 20 in the base 21 of its U-shaped cross-section for receiving a free end 22 of said oscillating arm 7 (seen in figure 3). As shown in figure 3, said joint part 8 further comprises two spaced-apart guiding protrusions 23 extending upwardly from an upper surface 17 of said joint part 8, wherein said guiding protrusions 23 are adapted to receive said free end 22 of said oscillating arm 7 between them.

Parts in figure 4 that correspond to their counterparts in figures 2 and 3 have been designated with the same reference numerals. In the embodiment of figure 4 the free end 22 of said oscillating arm 7 has a U-shaped cross-section, wherein legs 24 of said U-shaped cross-section are orientated towards a windscreen to be wiped and wherein a base 25 of the U-shaped cross-section is orientated parallel to a windscreen to be wiped. Between the legs 24 of the U-shaped cross-section and protruding in a directions towards the wiper blade 2 is a joint pin or pivot pin 26 whose pivot axis extends in a direction of the oscillating movement of the oscillating arm 7. The diameter of the pivot pin 26 is adapted to the diameter of the bearing holes or said co-axial through holes 15 of said protrusions 12 of said connecting device 6 and to the diameter of said recesses 13 provided in legs 14 of the U-shaped cross-section of said joint part 8. In order to secure or retain the connecting device 6 (and thus the wiper blade 2 connected thereto) onto the oscillating arm 7, said oscillating arm 7 is provided with an extension comprising said pivot pin 26 and a L-shape shoulder 27 which projects out in the direction of said pivot pin 26 and across said wiper blade 2 and at the end of which is disposed a leg 28 facing the windscreen to be wiped. Said connecting device 6 has a width d of approximately 22 mm at the location of said L-shaped shoulder 27.

The invention is not restricted to the variants shown in the drawing, but it also extends to other embodiments that fall within the cope of the appended claims.

## Claims

1. A windscreen wiper device (1) of the flat blade type comprising an elastic, elongated carrier element, as well as an elongated wiper blade (2) of a flexible material, which can be placed in abutment with a windscreen to be wiped, which wiper blade (2) includes at least one longitudinal groove (3), in which groove (3) a longitudinal strip (4) of the carrier element is disposed, which windscreen wiper device (1) comprises a connecting device (6) for an oscillating arm (7), wherein said oscillating arm (7) can be pivotally connected to said connecting device (6) about a pivot axis near one end, with the interposition of a joint part(8), wherein said joint part (8) is detachably connected to said connecting device (6) by engaging protrusions (12) of said connecting device (6), at the location of said pivot axis, in recesses (13) provided in said joint part (8), wherein said protrusions (12) of said connecting device (6) are provided with co-axial through holes (15), wherein an upper surface of said joint part (8) comprises a central recess (20), wherein
- said central recess (20) is arranged to accommodate a free end of a rod-shaped oscillating arm (7) of a first type;
- said upper surface is arranged to accommodate a L-shaped shoulder (27) near a free end of an oscillating arm (7) of a second type, wherein said free end of said oscillating arm of the second type also comprises a transverse pivot pin (26), wherein said co-axial through holes (15) are arranged to receive said pivot pin (26) and wherein a side of said joint part (8) is arranged to abut a leg (28) of said L-shaped shoulder (27) disposed at an end thereof and facing a windscreen to be wiped, **characterized in that** said joint part (8) comprises a cap (16) provided with a protrusion (18) in use extending in downward direction towards a windscreen to be wiped, and wherein said downwardly extending protrusion (18) is adapted to engage in a correspondingly shaped hole (19) provided in said oscillating arm of a first type (7) for retaining said wiper blade (2) onto said oscillating arm (7).

2. A windscreen wiper device (1) according to claim 1, wherein said joint part (8) comprises lateral retention means arranged to restrict angular play of said oscillating arm (7) of the first type.

3. A windscreen wiper device (1) according to claim 1 or 2, wherein said cap (16) is hingeably connected to said joint part (8) between a closed position, wherein said wiper blade (2) is retained onto said oscillating arm (7), and an open position, wherein said wiper blade (2) can be released from said oscillating arm (7).

4. A windscreen wiper device (1) according to any of the preceding claims 1 through 3, wherein said joint part (8) has an at least substantially U-shaped cross-section at the location of its connection to said connecting device (6), and wherein said recess (20) is provided in the base (21) of the U-shaped cross-section.

5. A windscreen wiper device (1) according to any of the preceding claims 1 through 4, wherein said joint part (8) comprises two spaced-apart guiding protrusions (23) extending upwardly from an upper surface (17) of said joint part (8), and wherein said guiding protrusions (23) are adapted to receive said oscillating arm (7) of the first type between them.

6. A windscreen wiper device (1) according to any of the preceding claims 1 through 5, wherein said joint part (8) is detachably connected to said connecting device (6) through a snapping/clipping operation.

7. A windscreen wiper device (1) according to any of the preceding claims 1 through 6, wherein said joint part (8) has an at least substantially U-shaped cross-section at the location of its connection to said connecting device (6), and wherein said joint part (8) in each leg (14) of said U-shaped cross-section is provided with said recess (13) provided coaxially with said pivot axis.

8. A windscreen wiper device (1) according to any of the preceding claims 1 through 7, wherein the protrusions (12) extend outwards on either side of said connecting device (6), and wherein the protrusions (12) and their co-axial through holes (15) are at least substantially cylindrical.

9. A windscreen wiper device (1) according to any of the preceding claims 1 through 8, wherein said connecting device (6) can be pivotally connected to said oscillating arm (7) near its free end (22) about a pivot axis of said transverse pivot pin (26) provided on said oscillating arm (7) of the second type.

10. A windscreen wiper device (1) according to claim 9, wherein said joint part (8) has an at least substantially U-shaped cross-section at the location of its connection to said connecting device (6), wherein said joint part (8) in each leg (14) of said U-shaped cross-section is provided with said recess (13) provided coaxially with said pivot axis, said recesses (13) being co-axial, and wherein said co-axial recesses (13) and said co-axial through holes (15) of said protrusions (12) of said connecting device (6) are adapted to receive said pivot pin (26).

11. A vehicle provided with a windscreen wiper device (1) according to any of the preceding claims 1 through 10.

12. A method for manufacturing a windscreen wiper device (1) of the flat blade type comprising an elastic, elongated carrier element, as well as an elongated wiper blade (2) of a flexible material, which can be placed in abutment with a windscreen to be wiped, which wiper blade (2) includes at least one longitudinal groove (3), in which groove (3) a longitudinal strip (4) of the carrier element is disposed, which windscreen wiper device (1) comprises a connecting device (6) for an oscillating arm (7), wherein said oscillating arm (7) can be pivotally connected to said connecting device (6) about a pivot axis near one end, with the interposition of a joint part (8), wherein said joint part (8) is detachably connected to said connecting device (6) by engaging protrusions (12) of said connecting device (6), at the location of said pivot axis, in recesses (13) provided in said joint part (8), wherein said protrusions (12) of said connecting device (6) are provided with co-axial through holes (15), wherein an upper surface of said joint part (8) comprises a central recess (20), wherein
- said central recess (20) is arranged to accommodate a free end of a rod-shaped oscillating arm (7) of a first type;
- said upper surface is arranged to accommodate a L-shaped shoulder (27) near a free end of an oscillating arm (7) of a second type, wherein said free end of said oscillating arm of the second type also comprises a transverse pivot pin (26), wherein said co-axial through holes (15) are arranged to receive said pivot pin (26) and wherein a side of said joint part (8) is arranged to abut a leg (28) of said L-shaped shoulder (27) disposed at an end thereof and facing a windscreen to be wiped, **characterized in that** said joint part (8) comprises a cap (16) provided with a protrusion (18) in use extending in downward direction towards a windscreen to be wiped, and wherein said downwardly extending protrusion (18) is adapted to engage in a correspondingly shaped hole (19) provided in said oscillating arm of a first type (7) for retaining said wiper blade (2) onto said oscillating arm (7).

## Patentansprüche

1. Scheibenwischervorrichtung (1) des Typs Flachblatt-Wischer, die ein elastisches längliches Trägerelement sowie ein längliches Wischerblatt (2) aus einem flexiblen Material, das anliegend an eine zu wischende Windschutzscheibe platziert werden kann, umfasst, wobei das Wischerblatt (2) mindestens eine Längsnut (3) aufweist und in der Nut (3) ein Längsstreifen (4) des Trägerelements angeordnet ist, wobei die Scheibenwischervorrichtung (1) eine Verbindungsvorrichtung (6) für einen Schwingarm (7) umfasst, wobei der Schwingarm (7) an der Verbindungsvorrichtung (6) schwenkbar um eine Schwenkachse nahe einem Ende verbunden werden kann, mit einem zwischengelegten Anschlussteil (8), wobei das Anschlussteil (8) lösbar mit der Verbindungsvorrichtung (6) verbunden ist, indem Vorsprünge (12) der Verbindungsvorrichtung (6) an der Stelle der Schwenkachse, in die Aussparungen (13) schwenkend eingreifen, die in dem Anschlussteil (8) vorgesehen sind, wobei die Vorsprünge (12) der Verbindungsvorrichtung (6) mit koaxialen Durchgangslöchern (15) versehen sind, wobei eine obere Fläche des Anschlussteils (8) eine zentrale Aussparung (20) aufweist, wobei
- die zentrale Aussparung (20) angeordnet ist, um ein freies Ende eines stabförmigen Schwingarms (7) eines ersten Typs aufzunehmen;
- die obere Fläche angeordnet ist, um eine L-förmige Schulter (27) nahe einem freien Ende eines Schwingarms (7) eines zweiten Typs aufzunehmen, wobei das freie Ende des Schwingarms des zweiten Typs auch einen querverlaufenden Drehzapfen (26) aufweist, wobei die koaxialen Durchgangslöcher (15) angeordnet sind, um den Drehzapfen (26) aufzunehmen, und wobei eine Seite des Anschlussteils (8) an einem Schenkel (28) der L-förmigen Schulter (27) anliegt, die an einem Ende davon angeordnet ist und einer zu wischenden Windschutzscheibe zugewandt ist, **dadurch gekennzeichnet, dass**
das Anschlussteil (8) eine Kappe (16) aufweist, die mit einem Vorsprung (18) versehen ist, die sich bei Gebrauch nach unten zu einer zu wischenden Windschutzscheibe erstreckt, und wobei der sich nach unten erstreckende Vorsprung (18) ausgebildet ist, in ein entsprechend geformtes Loch (19), das in dem Schwingarm eines ersten Typs (7) zum
Halten des Wischerblattes (2) auf dem Schwingarm (7) vorgesehen ist, einzugreifen.

2. Scheibenwischervorrichtung (1) nach Anspruch 1, wobei das Anschlussteil (8) seitliche Haltemittel umfasst, die angeordnet sind, um ein Winkelspiel des Schwingarms (7) des ersten Typs zu beschränken.

3. Scheibenwischervorrichtung (1) nach Anspruch 1 oder 2, wobei die Kappe (16) gelenkig mit dem Anschlussteil (8) zwischen einer geschlossenen Position, wobei das Wischerblatt (2) auf dem Schwingarm (7) gehalten wird, und einer offenen Position, wobei das Wischerblatt (2) von dem Schwingarm gelöst wird (7), verbunden ist.

4. Scheibenwischervorrichtung (1) nach einem der vorhergehenden Ansprüche 1 bis 3, wobei das Anschlussteil (8) einen mindestens im Wesentlichen U-förmigen Querschnitt an seiner Verbindungsstelle mit der Verbindungsvorrichtung (6) aufweist, und wobei die Aussparung (20) in der Basis (21) des U-förmigen Querschnitts vorgesehen ist.

5. Scheibenwischervorrichtung (1) nach einem der vorhergehenden Ansprüche 1 bis 4, wobei das Anschlussteil (8) zwei voneinander beabstandete Führungsvorsprünge (23) umfasst, die sich von einer oberen Fläche (17) des Anschlussteils (8) nach oben erstrecken, und wobei die Führungsvorsprünge (23) den Schwingarm (7) des ersten Typs zwischen ihnen aufnehmen können.

6. Scheibenwischervorrichtung (1) nach einem der vorhergehenden Ansprüche 1 bis 5, wobei das Anschlussteil (8) lösbar mit der Verbindungsvorrichtung (6) durch einen Einrasten/Einhängen-Vorgang verbunden ist.

7. Scheibenwischervorrichtung (1) nach einem der vorhergehenden Ansprüche 1 bis 6, wobei das Anschlussteil (8) mindestens einen im Wesentlichen U-förmigen Querschnitt an der Stelle seiner Befestigung an der Verbindungsvorrichtung (6) aufweist, und wobei das Anschlussteil (8) in jedem Schenkel (14) des U-förmigen Querschnittes mit einer koaxial zu der Schwenkachse vorgesehenen Aussparung (13) versehen ist.

8. Scheibenwischervorrichtung (1) nach einem der vorhergehenden Ansprüche 1 bis 7, wobei sich die Vorsprünge (12) auf jeder Seite der Verbindungsvorrichtung (6) nach außen erstrecken, und wobei die Vorsprünge (12) und ihre koaxialen Durchgangslöcher (15) mindestens im Wesentlichen zylindrisch sind.

9. Scheibenwischervorrichtung (1) nach einem der vorhergehenden Ansprüche 1 bis 8, wobei die Verbindungsvorrichtung (6) nahe ihrem freien Ende (22) um eine Schwenkachse des querverlaufenden Drehzapfens (26), der am Schwingarm (7) des zweiten Typs vorgesehen ist, schwenkbar mit dem Schwingarm (7) verbunden werden kann.

10. Scheibenwischervorrichtung (1) nach Anspruch 9, wobei der Anschlussteil (8) an der Stelle seiner Verbindung mit der Verbindungsvorrichtung (6) einen mindestens im Wesentlichen U-förmigen Querschnitt aufweist, wobei der Anschlussteil (8) in jedem Schenkel (14) des U-förmigen Querschnitts mit der Aussparung (13) koaxial zur Schwenkachse versehen ist, wobei die Aussparungen (13) koaxial sind und wobei die koaxialen Aussparungen (13) und die koaxialen Durchgangslöcher (15) der Vorsprünge (12) der Verbindungsvorrichtung (6) ausgebildet sind, um den Drehzapfen (26) aufzunehmen.

11. Fahrzeug, das mit einer Scheibenwischervorrichtung (1) nach einem der vorhergehenden Ansprüche 1 bis 10 versehen ist.

12. Verfahren zur Herstellung einer Scheibenwischervorrichtung (1) des Typs Flachblatt-Wischer, die ein elastisches längliches Trägerelement sowie ein längliches Wischerblatt (2) aus einem flexiblen Material, das anliegend an eine zu wischende Windschutzscheibe platziert werden kann, umfasst, wobei das Wischerblatt (2) mindestens eine Längsnut (3) aufweist und in der Nut (3) ein Längsstreifen (4) des Trägerelements angeordnet ist, wobei die Scheibenwischervorrichtung (1) eine Verbindungsvorrichtung (6) für einen Schwingarm (7) umfasst, wobei der Schwingarm (7) an der Verbindungsvorrichtung (6) schwenkbar um eine Schwenkachse nahe einem Ende verbunden werden kann, mit einem zwischengelegten Anschlussteil (8), wobei das Anschlussteil (8) lösbar mit der Verbindungsvorrichtung (6) verbunden ist, indem Vorsprünge (12) der Verbindungsvorrichtung (6) an der Stelle der Schwenkachse, in die Aussparungen (13) schwenkend eingreifen, die in dem Anschlussteil (8) vorgesehen sind, wobei die Vorsprünge (12) der Verbindungsvorrichtung (6) mit koaxialen Durchgangslöchern (15) versehen sind, wobei eine obere Fläche des Anschlussteils (8) eine zentrale Aussparung (20) aufweist, wobei
- die zentrale Aussparung (20) angeordnet ist, um ein freies Ende eines stabförmigen Schwingarms (7) eines ersten Typs aufzunehmen;
- die obere Fläche angeordnet ist, um eine L-förmige Schulter (27) nahe einem freien Ende eines Schwingarms (7) eines zweiten Typs aufzunehmen, wobei das freie Ende des Schwingarms des zweiten Typs auch einen querverlaufenden Drehzapfen (26) aufweist, wobei die koaxialen Durchgangslöcher (15) angeordnet sind, um den Drehzapfen (26) aufzunehmen, und wobei eine Seite des Anschlussteils (8) an einem Schenkel (28) der L-förmigen Schulter (27) anliegt, die an einem Ende davon angeordnet ist und einer zu wischenden Windschutzscheibe zugewandt ist,
**dadurch gekennzeichnet, dass**
das Anschlussteil (8) eine Kappe (16) aufweist, die mit einem Vorsprung (18) versehen ist, die sich bei Gebrauch nach unten zu einer zu wischenden Windschutzscheibe erstreckt, und wobei der sich nach unten erstreckende Vorsprung (18) ausgebildet ist, in ein entsprechend geformtes Loch (19), das in dem Schwingarm eines ersten Typs (7) zum Halten des Wischerblattes (2) auf dem Schwingarm (7) vorgesehen ist, einzugreifen.

## Revendications

1. Dispositif d'essuie-glace (1) de type à balai plat, comprenant un élément porteur élastique, allongé, ainsi qu'un balai d'essuie-glace allongé (2) réalisé avec un matériau flexible, qui peut être placé en butée avec le pare-brise à essuyer, lequel balai d'essuie-glace (2) comprend au moins une rainure longitudinale (3), dans laquelle rainure (3), on dispose une bande longitudinale (4) de l'élément porteur, lequel dispositif d'essuie-glace (1) comprend un dispositif de raccordement (6) pour un bras oscillant (7), dans lequel ledit bras oscillant (7) peut être raccordé, de manière pivotante, audit dispositif de raccordement (6) autour d'un axe de pivot à proximité d'une extrémité, avec l'interposition d'une partie de joint (8), dans lequel ladite partie de joint (8) est raccordée, de manière détachable, audit dispositif de raccordement (6) en mettant en prise des saillies (12) dudit dispositif de raccordement (6), à l'emplacement dudit axe de pivot, dans des évidements (13) prévus dans ladite partie de joint (8), dans lequel lesdites saillies (12) dudit dispositif de raccordement (6) sont prévues avec des trous débouchants coaxiaux (15), dans lequel une surface supérieure de ladite partie de joint (8) comprend un évidement central (20), dans lequel :
ledit évidement central (20) est agencé pour loger une extrémité libre d'un bras oscillant en forme de tige (7) d'un premier type ;
ladite surface supérieure est agencée pour loger un épaulement en forme de L (27) à proximité d'une extrémité libre d'un bras oscillant (7) d'un second type, dans lequel ladite extrémité libre dudit bras oscillant du second type comprend également une broche de pivot transversale (26), dans lequel lesdits trous débouchants coaxiaux (15) sont agencés pour recevoir ladite broche de pivot (26), et dans lequel un côté de ladite partie de joint (8) est agencé pour venir en butée contre une patte (28) dudit épaulement en forme de L (27) disposée au niveau de son extrémité et faisant face à un pare-brise à essuyer,
**caractérisé en ce que** :
ladite partie de joint (8) comprend un capuchon (16) prévu avec une saillie (18) s'étendant, à l'usage, dans la direction descendante vers un pare-brise à essuyer, et dans lequel ladite saillie s'étendant vers le bas (18) est adaptée pour se mettre en prise dans un trou (19) de forme correspondante prévu dans ledit bras oscillant dudit premier type (7) pour retenir ledit balai d'essuie-glace (2) sur ledit bras oscillant (7).

2. Dispositif d'essuie-glace (1) selon la revendication 1, dans lequel ladite partie de joint (8) comprend un moyen de retenue latéral agencé pour limiter le jeu angulaire dudit bras oscillant (7) du premier type.

3. Dispositif d'essuie-glace (1) selon la revendication 1 ou 2, dans lequel ledit capuchon (16) est raccordé, par charnière, à ladite partie de joint (8) entre une position fermée, dans laquelle ledit balai d'essuie-glace (2) est retenu sur ledit bras oscillant (7), et une position ouverte dans laquelle ledit balai d'essuie-glace (2) peut être libéré dudit bras oscillant (7).

4. Dispositif d'essuie-glace (1) selon l'une quelconque des revendications 1 à 3, dans lequel ladite partie de joint (8) a une section transversale au moins sensiblement en forme de U à l'emplacement de son raccordement audit dispositif de raccordement (6), et dans lequel ledit évidement (20) est prévu dans la base (21) de la section transversale en forme de U.

5. Dispositif d'essuie-glace (1) selon l'une quelconque des revendications 1 à 4, dans lequel ladite partie de joint (8) comprend deux saillies de guidage (23) espacées s'étendant vers le haut à partir d'une surface supérieure (17) de ladite partie de joint (8), et dans lequel lesdites saillies de guidage (23) sont adaptées pour recevoir ledit bras oscillant (7) du premier type entre elles.

6. Dispositif d'essuie-glace (1) selon l'une quelconque des revendications 1 à 5, dans lequel ladite partie de joint (8) est raccordée, de manière détachable audit dispositif de raccordement (6) par une opération d'encliquetage / fixation.

7. Dispositif d'essuie-glace (1) selon l'une quelconque des revendications 1 à 6, dans lequel ladite partie de joint (8) a une section transversale au moins sensiblement en forme de U à l'emplacement de son raccordement audit dispositif de raccordement (6), et dans lequel ladite partie de joint (8) dans chaque patte (14) de ladite section transversale en forme de U est prévue avec ledit évidement (13) prévu de manière coaxiale avec ledit axe de pivot.

8. Dispositif d'essuie-glace (1) selon l'une quelconque des revendications 1 à 7, dans lequel les saillies (12) s'étendent vers l'extérieur de chaque côté dudit dispositif de raccordement (6), et dans lequel les saillies (12) et leurs trous débouchants coaxiaux (15) sont au moins sensiblement cylindriques.

9. Dispositif d'essuie-glace (1) selon l'une quelconque des revendications 1 à 8, dans lequel ledit dispositif de raccordement (6) peut être raccordé, de manière pivotante, audit bras oscillant (7) à proximité de son extrémité libre (22) autour d'un axe de pivot de ladite broche de pivot transversale (26) prévue sur ledit bras oscillant (7) du second type.

10. Dispositif d'essuie-glace (1) selon la revendication 9, dans lequel ladite partie de joint (8) une section transversale au moins sensiblement en forme de U à l'emplacement de son raccordement audit dispositif de raccordement (6), dans lequel ladite partie de joint (8) dans chaque jambe (14) de ladite section transversale en forme de U est prévue avec ledit évidement (13) prévu de manière coaxiale avec ledit axe de pivot, lesdits évidements (13) étant coaxiaux, et dans lequel lesdits évidement coaxiaux (13) et lesdits trous débouchants coaxiaux (15) desdites saillies (12) dudit dispositif de raccordement (6) sont adaptés pour recevoir ladite broche de pivot (26).

11. Véhicule doté d'un dispositif d'essuie-glace (1) selon l'une quelconque des revendications 1 à 10.

12. Procédé pour fabriquer un dispositif d'essuie-glace (1) de type à balai plat comprenant un élément porteur élastique allongé, ainsi qu'un balai d'essuie-glace allongé (2) réalisé avec un matériau flexible, qui peut être placé en butée avec un pare-brise à essuyer, lequel balai d'essuie-glace (2) comprend au moins une rainure longitudinale (3), dans laquelle rainure (3), on dispose une bande longitudinale (4) de l'élément porteur, lequel dispositif d'essuie-glace (1) comprend un dispositif de raccordement (6) pour un bras oscillant (7), dans lequel ledit bras oscillant (7) peut être raccordé, de manière pivotante, audit dispositif de raccordement (6) autour d'un axe de pivot à proximité d'une extrémité, avec l'interposition d'une partie de joint (8), dans lequel ladite partie de joint (8) est raccordée, de manière détachable, audit dispositif de raccordement (6) en mettant en prise des saillies (12) dudit dispositif de raccordement (6), à l'emplacement dudit axe de pivot, dans des évidements (13) prévus dans ladite partie de joint (8), dans lequel lesdites saillies (12) dudit dispositif de raccordement (6) sont prévues avec des trous débouchants coaxiaux (15), dans lequel une surface supérieure de ladite partie de joint (8) comprend un évidement central (20), dans lequel :
ledit évidement central (20) est agencé pour loger une extrémité libre d'un bras oscillant en forme de tige (7) d'un premier type ;
ladite surface supérieure est agencée pour loger un épaulement en forme de L (27) à proximité d'une extrémité libre d'un bras oscillant (7) d'un second type, dans lequel ladite extrémité libre dudit bras oscillant du second type comprend également une broche de pivot transversale (26), dans lequel lesdits trous débouchants coaxiaux (15) sont agencés pour recevoir ladite broche de pivot (26) et dans lequel un côté de ladite partie de joint (8) est agencé pour venir en butée contre une patte (28) dudit épaulement en forme de L (27) disposée au niveau de son extrémité et faisant face à un pare-brise à essuyer,
**caractérisé en ce que** :
ladite partie de joint (8) comprend un capuchon (16) prévu avec une saillie (18) s'étendant, à l'usage, dans la direction descendante vers un pare-brise à essuyer, et dans lequel ladite saillie (18) s'étendant vers le bas est adaptée pour se mettre en prise dans un trou (19) formé de manière correspondante prévu dans ledit bras oscillant d'un premier type (7) pour retenir ledit balai d'essuie-glace (2) sur ledit bras oscillant (7).
